# EUROPÄISCHE PATENTANMELDUNG

(11) **EP 3 038 221 A1**
(43) Veröffentlichungstag der Anmeldung: **29.06.2016**
(21) Anmeldenummer: 14200326.8
(22) Anmeldetag: 24.12.2014
(51) Int. Cl.: H02G 5/06

(54) **Stromschiene und Vorrichtung mit einer Stromschiene**

(71) Anmelder: Zurecon AG, 9053 Teufen AR (CH)
(72) Erfinder: Pfluger, Gerd, 4625 Oberbuchsiten (CH)
(74) Vertreter: Rutz & Partner

(57) **Zusammenfassung**

Die Stromschiene (1) umfasst mehrere Leitungsstäbe (11, ..., 15), die getrennt voneinander von einem ersten Anschlussbereich (A) an einem Ende der Stromschiene (1) zu einem zweiten Anschlussbereich (B) am anderen Ende der Stromschiene (1) geführt und in einem Stromschienenkörper (10), vorzugsweise in einem gegossenen Isolationskörper aus Isolationsmaterial, wie Giessharz oder Polymerbeton, eingegossen sind. Erfindungsgemäss verläuft zwischen den beiden Anschlussbereichen (A, B) der Leitungsstamm (18) der Stromschiene (1), von dem wenigstens ein Leitungsast (19) mit Leitungsstäben (11, ..., 15) abzweigt, die zu einem dritten Anschlussbereich (C, D, E) führen und an die Anschlusskabel (31, ..., 35) anschliessbar oder angeschlossen sind, wobei die Leitungsstäbe (11, ..., 15) des Leitungsstamms (18) und die entsprechenden Leitungsstäbe (11, ..., 15) des Leitungsasts (19) unlösbar miteinander verbunden und im gemeinsamen Stromschienenkörper (10) eingegossen sind. Die mit den erfindungsgemässen Stromschienen (1) versehene Vorrichtung zur Energieverteilung ist bis zu den Energieabnehmern innerhalb der Räume eines Gebäudes (8) homogen ausgebildet, sodass die Vorrichtung über den gesamten Bereich, insbesondere im Bereich eines genutzten Leitungsschachts (80), alle Anforderungen uneingeschränkt erfüllt.

## Beschreibung

Die Erfindung betrifft eine Stromschiene und eine Vorrichtung zur Energieverteilung mit solchen Stromschienen.

Für die Übertragung von Strom mit hoher Leistung, hoher Sicherheit und Zuverlässigkeit werden Stromschienen als Übertragungsleitungen zwischen Transformatoren, Haupt- und Unterverteilern in Fabrikhallen, Gewerbe- und Verwaltungsgebäuden oder auch als Steigleitungen in Hochbauten eingesetzt. Stromschienen und deren Verwendung sowie dafür vorgesehene Befestigungsvorrichtungen sind z.B. in [1], Produktkatalog "Niederspannungs-Schienenverteiler LANZ HE 2.5.2" der LANZ OENSINGEN AG vom September 2009 beschrieben. Stromschienen dieser Art werden oft auch als Schienenverteiler bezeichnet.

Normalerweise werden Stromschienen mit mehreren Leitungsstäben, allgemein n mal m Leitungsstäbe aus Kupfer oder Aluminium verwendet, bei denen Verluste durch den Skineffekt oder durch den Proximity-Effekt reduziert werden. Grundlagen der Berechnung von Stromschienen finden sich z.B. in [2], D. Nelles und Ch. Tuttas, Elektrische Energietechnik, Leitfaden der Elektrotechnik, Teubner Verlag, Stuttgart 1977, Seite 187.

Die Leitungsstäbe qualitativ hochwertiger Stromschienen sind in Giessharz oder Epoxyzement bzw. Polymerbeton eingegossen. In dieser Ausgestaltung werden die Stromschienen auf Erdbebensicherheit, Schocksicherheit und Funktionserhalt im Brandfall ausgelegt. D.h., weder mechanische, thermische oder chemische Einwirkungen, insbesondere auch kein Druckwasser, können die Betriebssicherheit der Stromschienen gefährden. Mit den Stromschienen kann daher der maximale Sicherheitsstandard, insbesondere der Schutzgrad IP 68 eingehalten werden. Ferner kann ein hoher Standard für den Funktionserhalt im Brandfall, wie F90, eingehalten werden. Ferner werden Stromschienen oft mit einer Abschirmung versehen, mittels der niederfrequentierte magnetische Wechselfelder abgeschirmt und entsprechende Normen, wie Normen der Serie EN 61000, eingehalten werden können.

Gemäss [3], Marcel Schöb, »Power über Stromschiene oder Kabel?«, Wahl der geeigneten Energietransportverbindungen beim Bau von Industrieanlagen, Elektrotechnik 1/10, (http://www.elektrotechnik.ch), steigt der Energiebedarf in Industrieanlagen ständig an. Für Energieverteilnetze steht hingegen immer weniger Platz zur Verfügung. Leitungskanäle und Leitungsschächte werden ständig kleiner und werden zudem oft für mehrere Medien, insbesondere Wasser, Abwasser und Gase benutzt.

Zur Verbindung der einzelnen Stromschienenbauteile mit den genannten elektrischen Vorrichtungen sind Anschlusselemente und Anschlusskupplungen verwendbar, wie sie in [1], Seite 5 oder in [4], EP2107659A1, beschrieben sind. Auf diese Weise kann eine Stromschienenleitung durch ein Gebäude verlegt werden. In Zonen des Gebäudes, in denen Verbraucher stehen, werden Abzweigungen vorgesehen, die auf unterschiedliche Arten realisierbar sind. An den Enden der Stromschienen werden üblicherweise Abschlussköpfe vorgesehen, bei denen die einzelnen Leitungsstäbe mit Anschlusslaschen verbunden sind, die vorzugsweise vollständig eingegossen werden. Alternativ werden Anschlusskästen vorgesehen.

Aus [5], E-LINE MK Busbar Systems 100-160-225A, www.eae.com.tr, sind Anschlusskästen bekannt, bei denen Anschlusskontakte von Stromschienen mittels Federkontakten von Steckverbindungen kontaktiert werden. Die Anschlusskästen, die grosse "Steckverbinder" bilden, weisen ein Gehäuse auf, aus dem die Anschlusskabel hinaus geführt werden. Beim Öffnen des Gehäusedeckels wird die Verbindung zwischen den Anschlusskabeln und den Leitungsstäben der Stromschiene automatisch unterbrochen. Dazu sind an der Innenseite des Gehäusedeckels Kontaktmesser vorgesehen, die beim Schliessen des Gehäusedeckels in eine Kontaktbox hineingeführt werden, wodurch die elektrische Verbindung zwischen der Stromschiene und den Anschlusskabeln resultiert, die vom Anschlusskasten weggeführt werden. Die Verbindung zwischen den Leitungsstäben der Stromschiene und den Anschlusskabeln erfolgt somit über mehrere seriell geschaltete Kontaktverbindungen.

Hinsichtlich der Betriebssicherheit des Energieverteilnetzes ist zu beachten, dass die Versorgungsstränge stets aus einzelnen Elementen bestehen, die normalerweise seriell miteinander elektrisch verbunden sind. Dabei ist zu beachten, dass die Häufigkeit von Stromunterbrüchen und Störungen mit der Anzahl der Kopplungsstellen bzw. Kontaktstellen innerhalb des Energieverteilnetzes naturgemäss proportional ansteigt.

Es ist zudem zu beachten, dass das Energieverteilnetz äusseren Einflüssen ausgesetzt ist und dagegen geschützt werden soll. Insbesondere soll das Energieverteilnetz gegen Einwirkungen von Gasen, Feuchtigkeit, Wasser, insbesondere Druckwasser, Chemikalien, Feuer, und mechanische Einwirkungen, z.B. durch Erdbeben, geschützt werden. Obwohl Erdbeben in Mitteleuropa nur alle paar Jahre auftreten, sind damit verbundene Schäden, die z.B. in chirurgischen Abteilungen oder in Datenverarbeitungsanlagen entstehen können, konsequent zu vermeiden.

Allgemein ist zu beachten, dass ein Energieversorgungsstrang stets so gut ist wie sein schwächstes Glied. Dies gilt für die Funktionsfähigkeit, aber auch für alle wichtigen Nebenfaktoren, wie die Einhaltung der Eigenschaften, die durch die Normen IP 68 (z.B. Schutz gegen Druckwasser), F90 (Funktionserhalt im Brandfall) und EN 61000 (EMV-Verträglichkeit) gefordert sind.

In [6], E. Vinaricky, Elektrische Kontakte, Werkstoffe und Anwendungen: Grundlagen, Technologien, Prüfverfahren, Springer Verlag, 2. Auflage, März 2002 (siehe z.B. die Seiten 1-6), sind die Grundlagen von Kontaktverbindungen beschrieben. Darin wird zwischen einer scheinbaren Kontaktfläche, einer tragenden Kontaktfläche und einer wirksamen Kontaktfläche unterschieden. Unter der scheinbaren Kontaktfläche versteht man den Teil der zur Kontaktgabe bestimmten Fläche auf Kontaktstücken, an dem makroskopisch gesehen eine Berührung erfolgen kann. Die tragende Kontaktfläche ist der Teil der scheinbaren Kontaktfläche, der die Kontaktkraft tatsächlich aufnimmt. Die tragende Kontaktfläche umfasst die wirksame Kontaktfläche, durch die der Strom fliesst und die somit die Summe aller stromführungsfähigen Berührungsflächen darstellt. Da Oberflächen von Festkörpern im physikalischen Sinne stets rau sind, beschränkt sich die gegenseitige Berührung der Kontaktstücke auf mikroskopisch kleine Berührungsflächen. Weiterhin ist zu beachten, dass metallische Oberflächen in Gasatmosphäre oft in Folge von Feuchtigkeit, Staub, Rauch und korrosiven Gasen von mehr oder weniger dicken Fremdschichten bedeckt werden.

Hinsichtlich der Betriebsqualität der Anschlusskästen ist daher nachteilig, dass einerseits mehrere Kontaktverbindungen erforderlich sind, und dass diese Kontaktverbindungen andererseits geringe wirksame Kontaktflächen sowie verschleissanfällig Elemente aufweisen. In diesem Kontaktbereich kann daher nicht die Verbindungsqualität erreicht werden, welche für Stromschienen allein erzielbar ist. Ein einheitlicher Sicherheits- und Qualitätsstandard kann zwischen den Anschlusspunkten der gesamten elektrischen Anlage, z.B. zwischen Klemmen eines Leistungsschalters einerseits, und Anschlusspunkten eines Transformators andererseits, nicht oder nur mit sehr grossem Aufwand aufrechterhalten werden.

Mit den Anschlusskästen lässt sich zudem der höchste Sicherheitsstandard IP 68, insbesondere der Schutz gegen einwirkendes Druckwasser, kaum einhalten. D.h., bereits an den Schnittstellen der Stromschienen, die ausserhalb des Isolationskörpers der Stromschiene liegen ist mit einem reduzierten Sicherheitsgrad zu rechnen. Hinsichtlich des Funktionserhalts im Brandfall liegen die Schwachstellen zudem stets bei den Anschlusskästen, die relativ frühzeitig ausfallen.

Die Anschlusskästen sind zudem voluminös und weisen oft einen grösseren Querschnitt auf, als die Stromschienen selbst. Die Anschlusskästen nehmen daher viel Raum in Anspruch, was besonders nachteilig ist, da in den Installationskanälen und Installationsschächten kritische Raumverhältnissen vorliegen, worauf bereits hingewiesen wurde.

In Steigzonen von Gebäuden, insbesondere in Hochbauten, sind normalerweise Leitungsschächte vorgesehen, in denen die Stromschienen vertikal nach oben geführt werden. In diesen Leitungsschächten steht wenig Raum zur Verfügung, weshalb Montage und Wartung der Anschlusskästen erheblichen Aufwand verursachen.

Der vorliegenden Erfindung liegt daher die Aufgabe zugrunde, eine verbesserte Stromschiene und eine verbesserte Vorrichtung zur Energieverteilung mit solchen Stromschienen zu schaffen. Insbesondere ist eine Stromschiene zu schaffen, mittels der Energieverteilsysteme unter Wahrung eines einheitlich hohen Qualitätsstandards, z.B. des Standards IP 68, wie er für die Installation von Stromschienen vorgesehen ist, erstellt werden können.

Weiterhin soll die Wahrscheinlichkeit von Betriebsausfällen in Gebäudeeinheiten reduziert werden, in denen der sogenannte "Backbone" oder der Hauptstrang des Energieversorgungssystems verläuft. Insbesondere sollen Betriebsausfälle auch dann verhindert oder zumindest verzögert werden, wenn weitere Gebäudesysteme versagen. Insbesondere soll der Funktionserhalt bei Wasserrohrbruch und im Brandfall gesichert werden.

Insbesondere in Leitungsschächten, z.B. in Steigzonen, in denen kritische Raumverhältnisse vorliegen und Wartungsarbeiten nur schwierig durchführbar sind, soll der maximale Sicherheitsstandard gewährleistet werden. Ferner ist die Zugänglichkeit zu den Leitungen im Leitungsschacht bzw. ein möglichst grosser Sicherheitsabstand zu gewährleisten.

Ferner sollen spätere Modifikationen und Erweiterungen des Energieverteilnetzes mit minimalem Aufwand und unter Wahrung des hohen Sicherheitsstandards der Stromschienen möglich sein.

Wünschenswert wäre es ferner, wenn die baulichen Massnahmen für die Leitungsschächte vereinfacht und diese mit reduzierten Abmessungen realisiert werden könnten und die Stromschieneninstallation weniger Raum in Anspruch nehmen würde.

Die Vorrichtung zur Energieverteilung soll die uneingeschränkte Funktionsfähigkeit, aber auch die Einhaltung der Eigenschaften, die durch die Normen IP 68 (z.B. Schutz gegen Druckwasser), F90 (Funktionserhalt im Brandfall) und EN 61000 (EMV- Verträglichkeit) gefordert sind, bis zum elektrischen Verbraucher gewährleisten. Gefordert ist ein homogenes Energieverteilungssystem ohne Schwachstellen.

Diese Aufgabe wird mit einer Stromschiene und einer Vorrichtung für die Energieverteilung mit solchen Stromschienen gelöst, welche die in Anspruch 1 bzw. 9 angegebenen Merkmale aufweisen. Vorteilhafte Ausgestaltungen der Erfindung sind in weiteren Ansprüchen angegeben.

Die Stromschiene umfasst mehrere Leitungsstäbe, die getrennt voneinander von einem ersten Anschlussbereich an einem Ende der Stromschiene zu einem zweiten Anschlussbereich am anderen Ende der Stromschiene geführt und in einem Stromschienenkörper, vorzugsweise in einem gegossenen Isolationskörper aus Isolationsmaterial, wie Giessharz oder Polymerbeton, eingegossen sind.

Erfindungsgemäss verläuft zwischen den beiden Anschlussbereichen der Leitungsstamm der Stromschiene, von dem wenigstens ein Leitungsast mit Leitungsstäben abzweigt, die zu einem dritten Anschlussbereich führen und an die Anschlusskabel anschliessbar oder angeschlossen sind, wobei die Leitungsstäbe des Leitungsstamms und die entsprechenden Leitungsstäbe des Leitungsasts unlösbar miteinander verbunden und im gemeinsamen Stromschienenkörper eingegossen sind.

Erfindungsgemässe Stromschienen erlauben es somit, elektrische Energie von einem Hauptstrang abzuzweigen und über einen Nebenstrang im Gebäude wegzuführen, wobei der Hauptstrang und der Nebenstrang denselben Sicherheitsstandard erfüllen. Aufgrund der Fertigung der Stromschiene im Werk kann die Verzweigung der Leitungsstäbe mit der höchsten Verbindungsqualität realisiert werden. Auf diese Weise können Störungen praktisch eliminiert werden. Ferner können Verluste aufgrund von Übergangswiderständen vermieden werden, die bei mangelhafter Kontaktierung auftreten.

Die Leitungsstäbe des Leitungsstamms und die entsprechenden Leitungsstäbe des Leitungsasts werden vorzugsweise einstückig ausgebildet, sodass keinerlei Schwächung entlang dem Leitungsquerschnitt zwischen den Anschlussbereichen der Leitungsstäbe resultiert. Alternativ können die Leitungsstäbe des Leitungsstamms und die entsprechenden Leitungsstäbe des Leitungsasts auch miteinander verschweisst oder miteinander verschraubt werden. Spätestens nach dem Vergiessen der Leitungsstäbe in den Isolationskörper resultiert zwischen allen Anschlussbereichen eine praktisch homogene Stromschiene.

Da im Leitungsstamm die Energie für das ganze Gebäude und in den Leitungsästen nur die Energie für einzelne Gebäudebereiche, z.B. für einzelne Etagen, geführt wird, wird dies bei der Dimensionierung der Leitungsäste, insbesondere der Leitungsstäbe der Leitungsäste vorzugsweise berücksichtigt. Der Querschnitt der Leitungsstäbe der Leitungsäste kann z.B. 1/4 bis 1/2 des Querschnitts der Leitungsstäbe des Leitungsstamms betragen. Die schlanke Ausbildung der Leitungsäste erlaubt es in der Folge, diese durch eine kleinere Maueröffnung in einer Gebäudewand aus dem Leitungsschacht hinaus in einen Gebäuderaum hinein zu führen. Für die Verlegung der erfindungsgemässen Stromschiene können daher kleine Maueröffnungen vorgesehen werden, die leicht wieder abgedichtet werden können.

Die erfindungsgemässen Stromschienen können für beliebige Strukturen des Gebäudes und des Leitungsschachts konfektioniert werden. Häufig wird ein vertikaler Leitungsschacht in einem Gebäude peripher angeordnet. In der Folge werden die erfindungsgemässen Stromschienen derart konfektioniert, dass sie vor Ort zu einem Hauptstrang zusammengefügt werden können, der innerhalb des Leitungsschachts nach oben geführt wird. Leitungsäste bzw. Nebenstränge werden derart vorgesehen, dass diese an den vorgesehenen Stellen bzw. jeweils auf einer bestimmten Etagenhöhe einseitig in eine Gebäudeetage hinein geführt werden können.

Der Leitungsschacht kann grundsätzlich auch zentral, z.B. im Bereich eines Liftschachts, angeordnet werden. In diesem Fall können erfindungsgemässe Stromschienen vorteilhaft mit zwei oder mehreren Leitungsästen versehen werden, die untereinander z.B. den Winkel von 90° oder 180° einschliessen. Z.B. wird eine kreuzförmige Stromschiene mit einander gegenüberliegenden Leitungsästen vorgesehen, die nacheinander in die zugehörigen Maueröffnungen eingefügt werden. Die Stromschiene wird beispielsweise gedreht und mit dem ersten Leitungsast in die erste Maueröffnung eingeführt. Anschliessend wird der zweite Leitungsast in die zweite Maueröffnung eingeführt. Die Länge der Leitungsäste ist dabei an den Abstand der Maueröffnungen derart angepasst, dass die Leitungsäste jeweils soweit notwendig in die gegenüberliegenden Gebäuderäume eingeführt werden können. Die Längen der Leitungsäste werden gleich oder unterschiedlich gewählt, so dass die Installation der Stromschienen, wie beschrieben, vollzogen werden kann und der Leitungsstamm der Stromschiene abschliessend innerhalb des Leitungsschachts bedarfsweise, z.B. exzentrisch positioniert werden kann.

In der obersten Etage kann vorteilhaft eine T-förmig ausgebildete Stromschiene verwendet werden, deren Leitungsast in den Leitungsschacht hineinragt. Der Leitungsast bildet dadurch einen Teil des im Leitungsschacht verlaufenden Hauptstranges des Energieversorgungssystems, während der Leitungsstamm horizontal ausgerichtet in die mit Energie zu versorgenden Gebäuderäume geführt wird.

Der Leitungsstamm der erfindungsgemässen Stromschiene dient üblicherweise der zentralen Führung der Energie, während die Leitungsäste der Grobverteilung der Energie auf den Gebäudeetagen dienen. Ausnahmsweise kann der Leitungsstamm jedoch auch zur Grobverteilung der Energie dienen, währenddem die Leitungsäste zur zentralen Führung der Energie verwendet werden.

Die Abmessungen der Stromschiene können bedarfsweise gewählt werden. Der Leitungsast wird in der Mitte oder exzentrisch zwischen den beiden Anschlussbereichen des Leitungsstamms angeordnet. Die Leitungsäste können ungleiche Längen aufweisen und auch länger oder kürzer als der Leitungsstamm sein. Der Leitungsstamm weist vorzugsweise eine Länge auf, die der Höhe einer Etage entspricht. Auf diese Weise kann für jede Etage eine erfindungsgemässe Stromschiene vorgesehen werden. Es ist jedoch auch möglich, die erfindungsgemässe Stromschiene mit wenigstens einer konventionellen Stromschiene zu ergänzen, mittels der der Leitungsstamm oder auch ein Leitungsast verlängert wird.

Die Leitungsstäbe der Endstücke der Stromschienen werden vorzugsweise miteinander verschraubt oder verschweisst und anschliessend vergossen. Als Gussmasse wird vorzugsweise dasselbe Material verwendet, welches zur Fertigung des Isolationskörpers verwendet wurde. Auf diese Weise kann die zusammengesetzte Stromschiene auf ihrer ganzen Länge entlang dem Leitungsschacht vergossen werden, sodass der maximale Sicherheitsstandard, z.B. IP 68, durchgehend gewährleistet wird. Innerhalb des Leitungsschachts kann auf Anschlusskästen verzichtet werden, so dass entsprechende Installationsarbeiten und Wartungsarbeiten innerhalb des Leitungsschachts entfallen. Innerhalb des Leitungsschachts verläuft daher nur die massive Stromschiene mit den vollständig eingegossen Leitungsstäben. Das Auftreten einer Betriebsstörung des elektrischen Systems innerhalb des Leitungsschachts kann daher praktisch ausgeschlossen werden. Die Installation der Stromschiene innerhalb des Leitungsschachts ist zudem weitestgehend immun gegenüber Störungen eines benachbarten Systems, z.B. eines Wasserrohrbruchs innerhalb des Leitungsschachts oder gegen Feuer. Der Funktionserhalt der Energieversorgung innerhalb des Gebäudes bleibt daher auch im Katastrophenfall zumindest über eine erforderliche Dauer gewährleistet.

Bei der erfindungsgemässen Vorrichtung zur Energieverteilung werden die Leitungsäste, ausnahmsweise der Leitungsstamm, der erfindungsgemässen Stromschienen vorteilhaft in Gebäuderäume geführt, die benachbart zum vertikal oder horizontal verlaufenden Leitungsschacht angeordnet sind. Innerhalb der Gebäuderäume werden die Leitungsstäbe vorzugsweise direkt mit Anschlusskabeln verbunden. Dazu werden die Endstücke der Anschlusskabel mit den Leitungsstäben des Leitungsasts, gegebenenfalls des Leitungsstamms, vorzugsweise unlösbar verbunden und im gemeinsamen Stromschienenkörper eingegossen. Dadurch wird die hohe Qualität des Stromschienensystems auch innerhalb der Gebäuderäume bis zum Verbraucher oder bis zu einem Energieabnehmer, wie einem Hauptverteiler, Unterverteiler oder Anschlusskasten, weitergeführt.

Die erfindungsgemässe Vorrichtung zur Energieverteilung ist daher homogen ausgebildet und frei von Schwachstellen. Gewährleistet sind die uneingeschränkte Funktionsfähigkeit, aber auch zumindest die Einhaltung der Eigenschaften, die durch die Normen IP 68 (z.B. Schutz gegen Druckwasser), F90 (Funktionserhalt im Brandfall) und EN 61000 (EMV-Verträglichkeit) gefordert sind, bis zum elektrischen Verbraucher.

Nachfolgend wird die Erfindung anhand von Zeichnungen näher erläutert. Dabei zeigt:
- Fig. 1: eine bekannte Stromschiene 1' mit fünf in einem Isolationskörper 10 eingebetteten Leitungsstäben 11, ..., 15, deren Enden in einem ersten und einem zweiten Anschlussbereich A, B frei liegen;
- Fig. 2: eine erfindungsgemässe Stromschiene 1 mit fünf in einem Isolationskörper 10 eingegossenen Leitungsstäben 11, ..., 15, die innerhalb eines entlang einer Längsachse x ausgerichteten Leitungsstamms 18 zu Anschlussbereichen A, B und entlang einer Querachse y in einem senkrecht dazu ausgerichteten Leitungsast 19 zu einem Anschlussbereich C führen;
- Fig. 3: die Stromschiene 1 von Fig. 2 mit zwei weiteren Leitungsästen 192, 192, die zu Anschlussbereichen D und E führen; und
- Fig. 4: eine Vorrichtung für die Energieverteilung in einem Gebäude 8 mit mehreren erfindungsgemässen Stromschienen 1, die einen in einem Leitungsschacht 80 geführten Hauptstrang bilden, von dem Nebenstränge durch Maueröffnungen 820 hindurch je in eine Gebäudeetage 831, ..., 834 geführt werden.

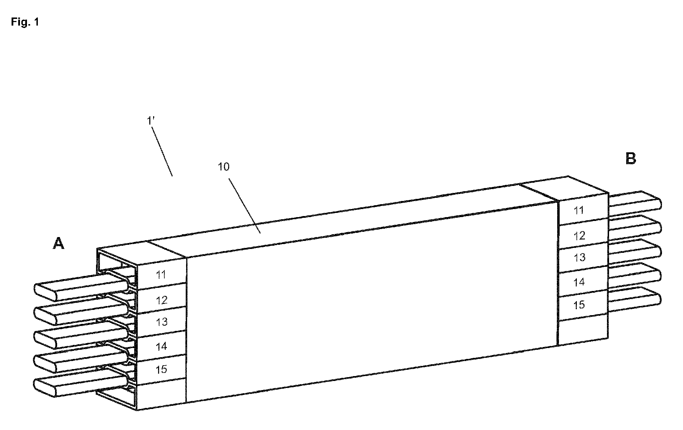

Fig. 1 zeigt eine bekannte Stromschiene 1' mit fünf in einem Isolationskörper 10 eingegossenen Leitungsstäben 11, ..., 15, deren Enden in einem ersten und einem zweiten Anschlussbereich A, B frei liegen. Eine derartige Stromschiene 1' sowie Vorrichtungen zur Verbindung dieser Stromschiene 1' mit elektrischen Vorrichtungen wurden eingangs beschrieben.

Insbesondere wurde ausgeführt, dass die Stromschienen 1' üblicherweise mit Abmessungen geliefert wird, die es erlauben, ein Energieverteilnetz zu erstellen, an das alle elektrischen Vorrichtungen konventionell an den beiden Anschlussbereichen A, B der Stromschienen 1' anschliessbar sind.

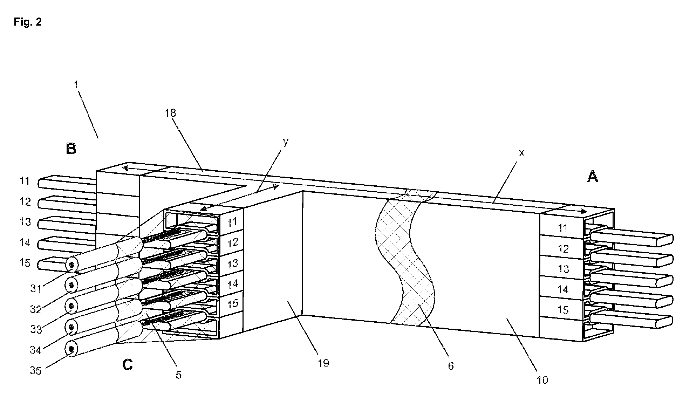

Fig. 2 zeigt eine erfindungsgemässe Stromschiene 1 mit fünf in einem Isolationskörper 10 eingegossenen Leitungsstäben 11, ..., 15, die innerhalb eines entlang einer Längsachse y ausgerichteten Leitungsstamms 18 zu Anschlussbereichen A und B und in einem senkrecht dazu ausgerichteten Leitungsast 19 zu einem Anschlussbereich C führen. Die Leitungsstäbe 11, ..., 15 des Leitungsstamms 18 und des daran anschliessenden Leitungsasts 19 sind in einem gemeinsamen Stromschienenkörper 10, vorzugsweise in einem gegossenen Isolationskörper aus Isolationsmaterial, wie Giessharz oder Polymerbeton, eingegossen. Die Leitungsstäbe 11, ..., 15 des Leitungsstamms 18 und des Leitungsasts 19 sind entweder einstückig miteinander verbunden, miteinander verschweisst oder miteinander verschraubt. Die erfindungsgemässe Stromschiene 1 weist daher über den gesamten Bereich bis zu jeder Extremität dieselbe hohe Qualität auf.

Die erfindungsgemässe Stromschiene 1 kann, wie die Stromschiene 1' von Fig. 1, zur Bildung eines z.B. in einem Leitungsschacht verlaufenden Stromschienenstranges verwendet werden, von dem durch Nebenstränge alle Etagen eines Gebäudes mit Energie versorgt werden. Dazu werden die Anschlussbereiche A und B mehrerer Stromschienen 1 seriell miteinander verbunden. Zwischen die erfindungsgemässen Stromschienen 1 können auch konventionelle Stromschienen 1' gemäss Fig. 1 geschaltet werden.

Von diesem Hauptstrang bzw. von jedem Leitungsstamm 18 der erfindungsgemässen Stromschienen 1 wird wenigstens ein

Nebenstrang bzw. ein Leitungsast 19 weggeführt. Dieser Leitungsast 19 kann vorteilhaft aus dem Leitungsschacht hinaus in einen Gebäuderaum geführt werden. Dort können die Leitungsstäbe 11, ..., 15 des Leitungsasts 19 mit Endstücken von Anschlussleitungen 31, ..., 35 verbunden werden. Die Endstücke der Anschlussleitungen 31, ..., 35 werden mit den Leitungsstäben 11, ..., 15 verschweisst (wie gezeigt) oder verschraubt und anschliessend vergossen, wodurch ein Abschlusskopf 5 gebildet wird. Alternativ kann ein Anschlusskasten auf das Endstück des Leitungsasts 19 aufgesetzt werden.

Fig. 2 zeigt ferner, dass der Isolationskörper 10 der Stromschiene 1 vorteilhaft mit einer Abschirmung 6 versehen werden kann, die durch die geführten Ströme verursachten Magnetfelder nach aussen abschirmt, sodass keinerlei störende Auswirkungen auf den Anwender oder elektrische Geräte verbleiben. Beispielsweise wird die Stromschiene 1 mit einem Mantel aus einem Spezialblech oder einer Spezialfolie versehen. Vorzugsweise werden Spezialfolien in der Art verwendet, wie sie unter den Bezeichnungen MUMETALL, VITROVAC, VITROPERM bekannt sind. Vorzugsweise werden Abschirmungen verwendet, die aus Nickel-Eisen Legierungen oder Kobalt-Eisen Legierungen bestehen. Mittels der erfindungsgemässen Stromschienen 1 gering somit die vollständige Abschirmung der Energieverteilungsvorrichtung bis zu den Verbrauchern. Entsprechende Vorschriften, wie EMV-Vorschriften, können daher problemlos eingehalten werden.

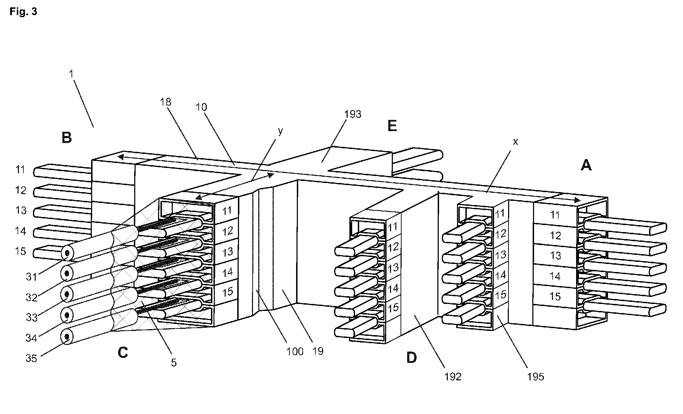

Fig. 3 zeigt die Stromschiene 1 von Fig. 2 mit zwei weiteren Leitungsästen 192, 192, die zu Anschlussbereichen D und E führen. Die Leitungsstäbe 11, ..., 15 des Leitungsstamms 18 und der Leitungsäste 19, 192, 193 sind wiederum unlösbar miteinander verbunden, einstückig ausgebildet, verschweisst oder verschraubt, und in einem gemeinsamen Isolationskörper 10 eingegossen. Fig. 3 illustriert verschiedene Möglichkeiten zur Ausgestaltung der erfindungsgemässen Stromschiene 1. Der Leitungsstamm 18 kann auf einer Seite mit mehreren Leitungsästen 19, 192 versehen werden. Der Leitungsstamm 18 kann auch auf einander gegenüberliegenden Seiten mit Leitungsästen 19, 193 versehen werden, die vorzugsweise auf gleicher Höhe angeordnet sind. Der Leitungsstamm 18 und die Leitungsäste 19, 193 bilden dadurch ein Stromschienenkreuz, das aus zwei identischen Kreuzelementen bestehen kann, von denen eines nominell als Leitungsstamm 18 bezeichnet wird. Die Leitungsäste 19, 193 des Stromschienenkreuzes sind in dieser Ausgestaltung exzentrisch angeordnet. Die illustrierten Gestaltungsmöglichkeiten zeigen, dass die erfindungsgemässe Stromschiene 1 bedarfsweise an jede Struktur eines Gebäudes und eines Leitungsschachts angepasst werden kann.

Fig. 3 zeigt zudem, dass der Leitungsast 192 kleiner dimensioniert ist als der Leitungsstamm 18 oder der benachbarte Leitungsast 19. Der Querschnitt der Leitungsstäbe 11, ..., 15 des Leitungsasts 192 wurde entsprechend dem zu übertragenden Energieanteil dimensioniert und kann daher durch eine relativ kleine Mauerdurchführung hindurch geführt werden.

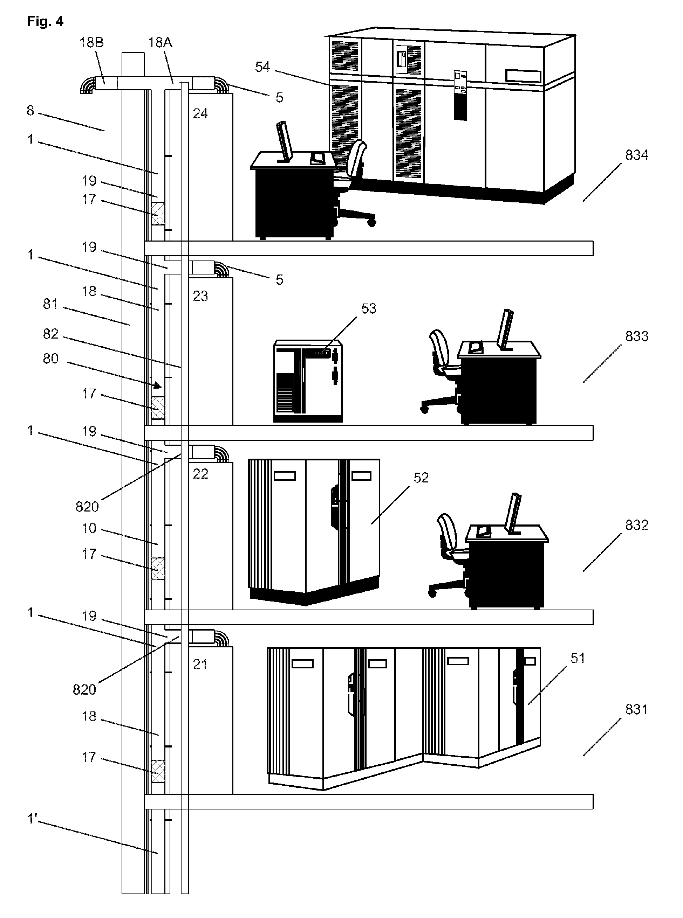

In Fig. 3 ist ferner gezeigt, dass der Isolationskörper 10 im Bereich des Leitungsasts 19 mit einer Einformung 100 versehen ist, die der festen Installation der Stromschiene 1 im Leitungsschacht 80 dient. Nach der Durchführung des Leitungsasts 19 durch eine Maueröffnung 820 (siehe Fig. 4) kann die Maueröffnung 820 mit einer Verschlussmasse, wie Zement, verschlossen und abgedichtet werden. Die Verschlussmasse dringt in die Einformung 100 im Leitungsast 19 ein und verbindet die Mauer 82 nach der Verfestigung der Verschlussmasse formschlüssig mit der installierten Stromschiene 1. Anstelle einer Einformung können auch Ausformungen, wie nach aussen ragende Flanschelemente, z.B. ein Flanschring, am Isolationskörper 10 im Bereich des Leitungsstamms 18 und/oder des Leitungsasts 19 vorgesehen werden. Auf diese Weise gelingt die stabile Installation der Stromschienen 1 ohne weitere Montagehilfsmittel. Der Isolationskörper 10 wird daher bedarfsweise mit Montageelementen in der Ausgestaltung von Einformungen oder Ausformungen versehen. Die Installation der Stromschienen 1 kann daher bereits vorteilhaft durch den Architekten berücksichtigt werden, um diese stabil und raumsparend in das Gebäude zu integrieren.

Fig. 3 zeigt ferner, dass insbesondere am Leitungsstamm 18 auch wenigstens ein Blindabgang 195 vorgesehen werden kann, an den bedarfsweise ein Leitungsast 19 anschliessbar ist. Die erfindungsgemässe Stromschiene 1 erlaubt es in dieser vorzugsweisen Ausgestaltung daher, dass Energieverteilersystem während oder auch nach der Installation der Stromschienen 1 flexibel auszubauen, indem die Blindabgänge bedarfsweise genutzt werden.

Fig. 4 zeigt eine Vorrichtung für die Energieverteilung in einem Gebäude 8, das mehrere Etagen 831, 832, 833, 834 aufweist, in denen elektrische Geräte 51, 52, 53, 54 je an einen zugehörigen Energieabnehmer, z.B. einen Energieverteiler oder Unterverteiler 21, 22, 23, 24 angeschlossen sind.

Die Energieabnehmer 21, 22, 23, 24 sind an ein Stromschienensystem angeschlossen, welches aus vier erfindungsgemässen Stromschienen 1 und einer konventionellen Stromschiene 1' besteht, die in einem Leitungsschacht 80 vertikal nach oben geführt sind. Der Leitungsschacht 80 ist angrenzend an eine Aussenwand 81 des Gebäudes 8 vorgesehen und durch eine Schachtwand 82 innerhalb des Gebäudes 8 weiter begrenzt. Die Schachtwand 82 bildet gleichzeitig eine Gebäudeinnenwand und ist mit Maueröffnungen 820 versehen, die je einen Zugang zu einer zugehörigen Gebäudeetage 831, ..., 834 schaffen.

Die Stromschienen 1, 1' bilden einen im Leitungsschacht 80 vertikal nach oben geführten Hauptstrang, von dem Nebenstränge durch die Maueröffnungen 820 hindurch je in eine der Gebäudeetagen 831, ..., 834 geführt werden. Die konventionelle Stromschiene 1', die auch in Fig. 1 gezeigt ist, dient der Führung von elektrischer Energie innerhalb des Leitungsschachts 80 auf die Höhe der ersten Etage 831 und ist dort über eine Stromschienenkupplung 17 mit einer erfindungsgemässen Stromschiene 1 verbunden, wie sie auch in Fig. 2 gezeigt ist. Diese Stromschiene 1 weist einen Leitungsast 19 auf, der durch eine der Maueröffnungen 820 hindurch zu einem Energieabnehmer 21 in der ersten Etage 831 geführt ist. Der Leitungsstamm 18 dieser Stromschiene 1 führt innerhalb des Leitungsschachts 80 weiter auf die Höhe der zweiten Etage 832 und ist dort mit der nachfolgenden Stromschiene 1 verbunden, die einen Leitungsast 19 aufweist, der durch eine der Maueröffnungen 820 zu einem Energieabnehmer 22 in der zweiten Etage 832 geführt ist. Diese Stromschiene 1 führt innerhalb des Leitungsschachts 80 weiter auf die Höhe der dritten Etage 833 und ist dort mit der nächsten Stromschiene 1 verbunden, die über einen Leitungsast 19 mit einem Energieabnehmer 23 in der dritten Etage 833 und über den Leitungsstamm 18 und eine Stromschienenkupplung 17 mit der letzten erfindungsgemässen Stromschiene 1 verbunden ist. Diese letzte Stromschiene 1, die T-förmig ausgestaltet und ausgerichtet ist, entspricht auch der Stromschiene von Fig. 2, weist jedoch stark abweichende Abmessungen auf. Der relativ kurze Leitungsstamm 18 mit den beiden Endstücken 18A und 18B ist horizontal ausgerichtet, während der lange Leitungsast 19 vertikal in den Leitungsschacht 80 hineinragt und in die Stromschienenkupplung 17 hineingeführt ist. Der Leitungsast 19 ist länger als der Leitungsstamm 18, dessen erstes Endstück 18A zu Energieabnehmer 24 in der vierten Etage 834 geführt ist. Das zweite Endstück 18B ist zu einem weiteren hier nicht dargestellten Gebäudeteil geführt.

Innerhalb des Leitungsschachts 80 befinden sich somit nur vergossene Teile der Stromschienen 1', 1. Die Abschlussköpfe 5 sind ausserhalb des Leitungsschachts 80 angeordnet und sind vorzugsweise ebenfalls vergossen, sodass nur die isolierten Kabel 31, ..., 35 in die übergross gezeigten Energieabnehmer 21, 22, 23, 24 hineingeführt werden. Innerhalb des Leitungsschachts 80 ist daher der maximale Sicherheitsgrad, z.B. IP 68, gewährleistet. Mit Systemstörungen ist innerhalb des Leitungsschachts 80 auch dann nicht zu rechnen, falls ein Wasserrohrbruch auftreten sollte. Im Falle eines Feuers wird der maximal mögliche Funktionserhalt gewährleistet. Da keine Anschlusskästen oder Anschlussstellen innerhalb des Leitungsschachts 80 vorgesehen sind, werden Störungen durch mangelhafte Kontaktierung, Oxidation, Wassereinbruch oder Feuer vollständig vermieden.

Nach der Installation der Stromschienen 1 muss daher kaum mehr in den Leitungsschacht 80 eingegriffen werden. Die erfindungsgemässen Stromschienen 1 können daher "ewig" eingemauert werden, sodass sie einen festen Bestandteil des Gebäudes 8 bilden.

Der Leitungsschacht 80 kann vorteilhaft mit einem Installationskanal versehen werden, welcher den Querschnitt der Standleitung der Stromschienen 1 aufweist und in den die Stromschienen 1 daher hinein verschoben werden können. Die Stromschienen 1, die vom Installationskanal teilweise oder vollständig aufgenommen werden benötigen daher nur wenig Raum innerhalb des Leitungsschachts 80, der schmaler dimensioniert werden kann und für die weiteren Leitungssysteme trotzdem genügend Raum aufweist.

Nach der Installation der Stromschienen 1 können notwendige Wartungsarbeiten und Modifikationen bequem in den Gebäudeetagen 831, ..., 834 durchgeführt werden.

Die erfindungsgemässe Vorrichtung, die mit erfindungsgemässen Stromschienen realisiert wird, weist daher hinsichtlich der Montage, der Wartung, der späteren Erweiterung und insbesondere auch hinsichtlich der Gebäudestruktur und des Gebäudemanagements wesentliche Vorteile auf. Dem Architekten steht ein Bauteil zur Verfügung, welches vorteilhaft in das Gebäude integriert werden kann und welches dazu nur wenig Raum in Anspruch nimmt.

### Literaturverzeichnis

[1] Produktkatalog "Niederspannungs-Schienenverteiler LANZ HE 2.5.2" der LANZ OENSINGEN AG vom September 2009
[2] D. Nelles und Ch. Tuttas, Elektrische Energietechnik, Leitfaden der Elektrotechnik, Teubner Verlag, Stuttgart 1977, Seite 187
[3] Marcel Schöb, »Power über Stromschiene oder Kabel?«, Wahl der geeigneten Energietransportverbindungen beim Bau von Industrieanlagen, Elektrotechnik 1/10, (http://www.elektrotechnik.ch)
[4] EP2107659A1
[5] E-LINE MK Busbar Systems 100-160-225A, www.eae.com.tr
[6] E. Vinaricky, Elektrische Kontakte, Werkstoffe und Anwendungen: Grundlagen, Technologien, Prüfverfahren, Springer Verlag, 2. Auflage, März 2002

## Patentansprüche

1. Stromschiene (1) mit mehreren elektrisch leitenden Leitungsstäben (11, ..., 15), die getrennt voneinander von einem ersten Anschlussbereich (A) an einem Ende der Stromschiene (1) zu einem zweiten Anschlussbereich (B) am anderen Ende der Stromschiene (1) geführt und in einem Stromschienenkörper (10), vorzugsweise in einem gegossenen Isolationskörper aus Isolationsmaterial, wie Giessharz oder Polymerbeton, eingegossen sind, **dadurch gekennzeichnet, dass** zwischen den beiden Anschlussbereichen (A, B) der Leitungsstamm (18) der Stromschiene (1) verläuft, von dem wenigstens ein Leitungsast (19) mit Leitungsstäben (11, ..., 15) abzweigt, die zu einem dritten Anschlussbereich (C, D, E) führen, an die Anschlusskabel (31, ..., 35) anschliessbar oder angeschlossen sind, wobei die Leitungsstäbe (11, ..., 15) des Leitungsstamms (18) und die entsprechenden Leitungsstäbe (11, ..., 15) des Leitungsasts (19) unlösbar miteinander verbunden und im gemeinsamen Stromschienenkörper (10) eingegossen sind.

2. Stromschiene (1) nach Anspruch 1, **dadurch gekennzeichnet, dass** die Leitungsstäbe (11, ..., 15) des Leitungsstamms (18) und die entsprechenden Leitungsstäbe (11, ..., 15) des Leitungsasts (19) einstückig ausgebildet oder miteinander verschweisst oder miteinander verschraubt sind.

3. Stromschiene (1) nach Anspruch 1 oder 2, **dadurch gekennzeichnet, dass** die Querschnitte der Leitungsstäbe (11, ..., 15) des Leitungsasts (19) gleich gross oder kleiner sind als die Querschnitte der Leitungsstäbe (11, ..., 15) des Leitungsstamms (18).

4. Stromschiene (1) nach Anspruch 1, 2 oder 3, **dadurch gekennzeichnet, dass** der Querschnitt des Leitungsasts (19) gleich gross oder kleiner ist als der Querschnitt des Leitungsstamms (18).

5. Stromschiene (1) nach einem der Ansprüche 1-4, **dadurch gekennzeichnet, dass** ein erster Leitungsast (19) auf einer Seite des Leitungsstamms (18) zu einem ersten Anschlussbereich (C) führt und dass ein zweiter Leitungsast (19) auf derselben oder einer anderen Seite des Leitungsstamms (18) zu einem zweiten Anschlussbereich (D, E) führt.

6. Stromschiene (1) nach einem der Ansprüche 1-5, **dadurch gekennzeichnet, dass** der Leitungsast (19) in der Mitte oder exzentrisch zwischen den beiden Anschlussbereichen (A, B) des Leitungsstamms (18) angeordnet ist und/oder dass der Leitungsast (19) länger oder kürzer als der Leitungsstamm (18) ist.

7. Stromschiene (1) nach einem der Ansprüche 1-6, **dadurch gekennzeichnet, dass** der Isolationskörper (10) im Bereich des Leitungsstamms (18) oder des Leitungsasts (19) mit wenigstens einer als Montageelement ausgebildeten Einformung oder Ausformung (100) versehen ist und/oder dass der Isolationskörper (10) mit einer Abschirmung (6) versehen ist.

8. Stromschiene (1) nach einem der Ansprüche 1-7, **dadurch gekennzeichnet, dass** die Endstücke der Anschlusskabel (31, ..., 35) mit den Leitungsstäben (11, ..., 15) des Leitungsasts (19) unlösbar verbunden und im gemeinsamen Stromschienenkörper (10) eingegossen sind.

9. Vorrichtung zur Energieverteilung in einem Gebäude (8), in dem ein der Aufnahme von Stromschienen (1) dienender Leitungsschacht (80) vorgesehen ist, mit wenigstens einer Stromschiene (1) nach einem der Ansprüche 1-8, die einen Leitungsstamm (18) und wenigstens einen Leitungsast (18) aufweist, **wobei** der Leitungsstamm (18) oder der Leitungsast (19) der Stromschienen (1) innerhalb des Leitungsschachts (80) angeordnet ist und der zugehörige Leitungsast (19) bzw. der Leitungsstamm (18) je durch eine Maueröffnung (820) in einer Schachtwand und/oder Gebäudewand (82) zu einem Energieabnehmer oder Energieverteiler (21, ..., 24) in einen separaten Raum des Gebäudes (8) geführt ist.

10. Vorrichtung nach Anspruch 9, **dadurch gekennzeichnet, dass** innerhalb des Leitungsschachts (80) nur vergossene Teile der Stromschienen (1) oder Stromschienenkupplungen (17) zwischen Stromschienen (1) vorgesehen sind und dass die Anschlussbereiche (A, B, C, D) der Stromschienen (1) ausserhalb des Leitungsschachts (80) innerhalb der Räume des Gebäudes (8) vorgesehen sind.

11. Vorrichtung nach Anspruch 9 oder 10, **dadurch gekennzeichnet, dass** in den Anschlussbereichen (A, B, C, D) der Stromschienen (1) die Endstücke der Anschlusskabel (31, ..., 35) mit den Leitungsstäben (11, ..., 15) des Leitungsasts (19) unlösbar verbunden und im gemeinsamen Stromschienenkörper (10) eingegossen sind.

12. Vorrichtung nach Anspruch 9, 10 oder 11, **dadurch gekennzeichnet, dass** der Leitungsschacht (80) vertikal ausgerichtet ist und auf jeder Gebäudeetage (831, ..., 834) wenigstens ein Leitungsstamm (18) oder ein Leitungsast (19) in einen Gebäuderaum einer Gebäudeetage (831, ..., 834) geführt ist.

13. Vorrichtung nach einem der Ansprüche 9-12, **dadurch gekennzeichnet, dass** zwischen den Stromschienen (1) mit einem Leitungsast (19) wenigstens eine Stromschiene (1') ohne Leitungsast vorgesehen ist, deren Isolationskörper (10) vorzugsweise mit einer Abschirmung (6) versehen sind.

14. Vorrichtung nach einem der Ansprüche 9-13, **dadurch gekennzeichnet, dass** die Stromschienenkupplungen (17) vergossen sind, so dass innerhalb des Leitungsschachts (80) eine vollständig vergossene Stromschiene (1) mit einem gemeinsamen Stromschienenkörper (10) resultiert, der bis in die Gebäuderäume hinein geführt ist.

15. Vorrichtung nach einem der Ansprüche 9-14, **dadurch gekennzeichnet, dass** die Isolationskörper (10) wenigstens einzelner der Stromschienen (1) mit einer Einformung oder Ausformung (100) versehen sind, die je in einer der Maueröffnungen (820) formschlüssig gehalten sind.
